Europäisches Patentamt

European Patent Office

Office européen des brevets

(11) Veröffentlichungsnummer: **0 227 996 B1**

(12) **EUROPÄISCHE PATENTSCHRIFT**

(45) Veröffentlichungstag der Patentschrift: **17.07.91**

(51) Int. Cl.⁵: **G01N 27/417**

(21) Anmeldenummer: **86117228.6**

(22) Anmeldetag: **10.12.86**

Die Akte enthält technische Angaben, die nach dem Eingang der Anmeldung eingereicht wurden und die nicht in dieser Patentschrift enthalten sind.

(54) **Verfahren zur Messung von Gaspartialdrücken mit einem Festelektrolyten aus tetragonalem Zirkondioxid.**

(30) Priorität: **12.12.85 DE 3543818**

(43) Veröffentlichungstag der Anmeldung:
**08.07.87 Patentblatt 87/28**

(45) Bekanntmachung des Hinweises auf die Patenterteilung:
**17.07.91 Patentblatt 91/29**

(84) Benannte Vertragsstaaten:
**AT BE CH DE FR GB IT LI LU NL SE**

(56) Entgegenhaltungen:
**EP-A- 0 036 786          EP-A- 0 096 519**
**EP-A- 0 134 136          DE-A- 2 939 428**
**DE-A- 3 035 072          GB-A- 2 054 167**
**US-A- 4 328 296**

(73) Patentinhaber: **Drägerwerk Aktiengesellschaft**
**Moislinger Allee 53-55**
**W-2400 Lübeck 1(DE)**

Patentinhaber: **Max-Planck-Gesellschaft zur Förderung der Wissenschaften e.V.**
**Bunsenstrasse 10**
**W-3400 Göttingen(DE)**

(72) Erfinder: **Schlechtriemen, Gerhard L.**
**Dr.rer.nat.Dipl.-Chem.**
**Morkerke Strasse 12**
**W-2400 Lübeck 1(DE)**
Erfinder: **Weppner, Werner, Dr. Dipl.-Phys.**
**Weinbergstrasse 20A**
**W-7000 Stuttgart 80(DE)**
Erfinder: **Schubert, Helmut, Dr.**
**Gartenstrasse 28**
**W-7250 Leonberg 7(DE)**

(74) Vertreter: **Prechtel, Jörg et al**
**Patentanwälte H. Weickmann, Dr. K. Fincke F.A. Weickmann, B. Huber Dr. H. Liska, Dr. J. Prechtel Möhlstrasse 22 Postfach 860 820 W-8000 München 86(DE)**

## Beschreibung

Die Erfindung betrifft ein Verfahren zur Messung von Gaspartialdrücken, insbesondere von Sauerstoffpartialdrücken, mit einem ionenleitenden Festelektrolyten aus Zirkondioxid als Sensorelement, welches zwischen zwei Elektroden zum Abgreifen einer elektrischen Meßgröße angeordnet ist.

Eine derartige Sensoranordnung ist aus der DE-A-28 37 593 und der US-A-4,328,296 bekannt geworden.

In den bekannten Gassensoren unter Verwendung von Zirkondioxid als Festelektrolyt wird grundsätzlich von der Leitfähigkeit der kubischen Modifikation des Zirkondioxids Gebrauch gemacht. Zur Stabilisierung des kubischen Zirkondioxids werden Zusätze aus Kalzium-, Magnesium- oder Yttriumoxid in hohen Konzentrationen von etwa 8 bis 9 Mol-% zugesetzt. Eine derartig stabilisierte kubische Modifikation des Zirkondioxids wird aus Gründen der Temperaturschockfestigkeit und mechanischen Stabilität des Gassensors eingesetzt. Durch die niedrige Wertigkeit der zugesetzten Metallionen entstehen Leerstellen im Sauerstoff-Teilgitter des Festelektrolyten, über welche mittels eines Leerstellenmechanismus ein Transport von Gasionen, insbesondere von Sauerstoffionen, möglich wird. Die bekannten Gassensoren werden zur Sauerstoffmessung in Abgasen von Verbrennungsmotoren oder in Rauchgasen von Feuerungsanlagen eingesetzt. Die optimale Arbeitstemperatur liegt bei den bekannten Gassensoren zwischen 800 °C und 1000 °C. Im Betrieb sind diese starken Temperaturwechseln ausgesetzt, so daß eine hohe Anforderung an die Thermoschockfestigkeit der eingesetzten Festelektrolyte aus Zirkondioxid gestellt wird.

Da der spezifische Widerstand von kubisch stabilisiertem Zirkondioxid wegen der hohen Aktivierungsenergie der Leitfähigkeit rapide mit fallender Temperatur ansteigt, wurde versucht, durch Verringerung der Elektrolytdicke unter Einsatz von Verfahren der Dünn- bzw. Dickfilmtechnologie die Zellimpedanz zu erniedrigen. Jedoch konnte dadurch die Arbeitstemperatur der Sensoren nicht in befriedigender Weise gesenkt werden. Die Ursache hierfür liegt offenbar darin, daß der geschwindigkeitsbestimmende Schritt des Einbaus von Gasmolekülen an den Elektroden von der Gasphase in den Festelektrolyten durch diese Maßnahme nicht beeinflußbar ist. Das Überführen der Gasmoleküle in die Gitterstruktur des Festelektrolyten ist bei Temperaturen deutlich unter 500 °C stark gehemmt.

Es ist bekannt, dem kubisch stabilisiertem Zirkondioxid einen geringen Anteil an tetragonalem Zirkondioxid aus Gründen der Erhöhung der mechanischen Stabilität beizufügen. Die Ionenleitfähigkeit wird jedoch auch in diesem Falle ausschließlich über die kubisch stabilisierte Modifikation des Zirkondioxids bewerkstelligt.

Der Erfindung liegt die Aufgabe zugrunde, ein Verfahren zur Messung von Gaspartialdrücken mit einem Festelektrolyten aus Zirkondioxid der genannten Art so zu verbessern, daß es bei einer Arbeitstemperatur von 200 °C bis 300 °C einsetzbar ist.

Gelöst wird diese Aufgabe durch ein Verfahren zur Messung von Gaspartialdrücken bei erhöter Temperatur mit einem ionenleitenden $ZrO_2$-Körper als Festelektrolyt, welcher zwischen zwei Elektroden zum Abgreifen einer elektrischen Meßgröße angeordnet ist, welches dadurch gekennzeichnet ist, daß man im Temperaturbereich von 200 bis 300 °C mit tetragonalem $ZrO_2$ mit einem Zusatz von 2 bis 3 Mol-% $Y_2O_3$ als Festelektrolyt mißt.

Entgegen der Erwartung des Fachmannes hat sich gezeigt, daß die Leitfähigkeit einer derartigen tetragonalen Phase des Zirkondioxids, trotz der wesentlich geringeren Menge an zugesetzten Metallionen und der dadurch bedingten Verringerung der Leerstellen im Sauerstoffteilgitter auf 1/3 bis 1/4, in der gleichen Größenordnung wie die Leitfähigkeit der bekannten hochdotierten kubischen Modifikation von Zirkondioxid liegt.

Tetragonales $ZrO_2$ ist bereits bekannt aus der EP 36 786 A1. Dieser liegt die Aufgabe zugrunde, den starken Festigkeitsverlust von teilstabilisierten Zirkondioxid-Keramiken im Temperaturbereich 200 bis 300 °C zu beseitigen, so daß derartige Keramikbauteile bei häufigem Erhitzen auf etwa 800 °C und Abkühlen auf Raumtemperatur ihre Festigkeit im wesentlichen beibehalten. Dort finden sich jedoch keinerlei Hinweise, aus denen der Fachmann hätte entnehmen können, daß die genetischen Eigenschaften bezüglich der Gleichgewichts-EMK und die Ionenleitfähigkeit eine solche Keramik weitaus besser für die Messung von Gaspartialdrücken eignen würde, als das weit höher dotierte kubische $ZrO_2$.

Ein potentiometrisch arbeitender Leitfähigkeitssensor, dessen Festelektrolyt erfindungsgemäß aus tetragonalem Zirkondioxid besteht, zeigt überraschenderweise eine Einstellung der Gleichgewichts-EMK schon innerhalb von Sekunden oder Minuten bei vergleichsweise niedrigen Arbeitstemperaturen zwischen 200 und 300 °C. Offenbar liegen beim tetragonalen Zirkondioxid die wesentlich günstigeren Bedingungen für eine hinreichend schnelle Kinetik der zur Einstellung stabiler Potentiale notwendigen Einbauschritte zwischen der Gasphase und dem Festelektrolyten vor.

Ein Sauerstoffsensor für das erfindungsgemäße Verfahren mit tetragonalem Zirkondioxid als Sauerstof-

EP 0 227 996 B1

fionenleiter ist entsprechend der Ausbildung einer Konzentrationskette wie folgt aufgebaut:

| Referenzelektrode | tetragonales $ZrO_2$ | Pt (porös) |
|---|---|---|
| Pt | mit 2-3 Mol% $Y_2O_3$ | $P_{O_2}$ (Meßgas) |

Zur Erzeugung eines Referenzsauerstoffpartialdrucks kann z.B. Luft verwendet werden, die über poröses Platin mit dem tetragonalen $ZrO_2$ in Wechselwirkung tritt. Zu diesem Zweck wurde eine tetragonale $ZrO_2$-Scheibe unter Verwendung von Übergangsgläsern in ein Duran-Glasrohr eingeschmolzen. Alternativ können auch Mischungen aus Metallen mit ihren Metalloxiden als Referenz verwendet werden, die gleichermaßen eine definierten Sauerstoffpartialdruck liefern. Auf der Meßseite wird in ähnlicher Weise wie bei der Verwendung des kubischen $ZrO_2$ eine poröse Platinschicht aufgebracht. An den 3-Phasengrenzen, an denen Festelektrolyt, Platin und die Gasphase in Kontakt sind, können Elektronen ausgetauscht werden und es kommt zu einem Übergang von Sauerstoff aus der Gasphase in den Elektrolyten. Durch die andere Struktur des hier verwendeten Zirkondioxids ist die Kinetik dieses Prozesses im vorliegenden Fall wesentlich schneller als bei Verwendung des kubischen $ZrO_2$.

Unter isothermen Bedingungen hängt die im Grenzfall der stromlosen Messung als EMK bezeichnete elektrische Potentialdifferenz zwischen den beiden Ableitungen nach der Nernst'schen Gleichung wie folgt mit dem Partialdruck des Meßgases ($PO_2$) und dem Partialdruck des Sauerstoffs an der Referenzelektrode ($PO_2$) zusammen:

$$E = \frac{RT}{4F} \ln \frac{PO_2}{PO_2'}$$

Die in den Experimenten verwendeten tetragonalen $ZrO_2$-Keramiken wurden aus kopräzipitierten Pulvern aus 97 mol% $ZrO_2$ und 3 mol% $Y_2O_3$ (Toyo Soda Manufacturing Company TZ-3Y) hergestellt. Die unter einem Druck von 630 MPa kaltisostatisch gepreßten Grünlinge wurden in Luft bei einer Temperatur von 1400 °C für 2 Stunden gesintert. Außerdem wurden Proben bei 1400 °C für 15 Minuten in Luft vorgesintert und anschließend in Argon-Atmosphären bei 1200 - 1500 °C für eine Zeitdauer von 1· Minute bis 2 Stunden heißisostatisch gepreßt. Anschließend erfolgte Reoxidation unter Atmosphärengas.

Ein Ausführungsbeispiel für das Verfahren mit tetragonalem Zirkondioxid als Festelektrolyt wird anhand der Zeichnung erläutert und im nachfolgenden beschrieben.

Es zeigen

Figur 1 den Aufbau eines Gassensors

Figur 2 ein vergleichendes Diagramm für eine Sauerstoffpartialdruckbestimmung.

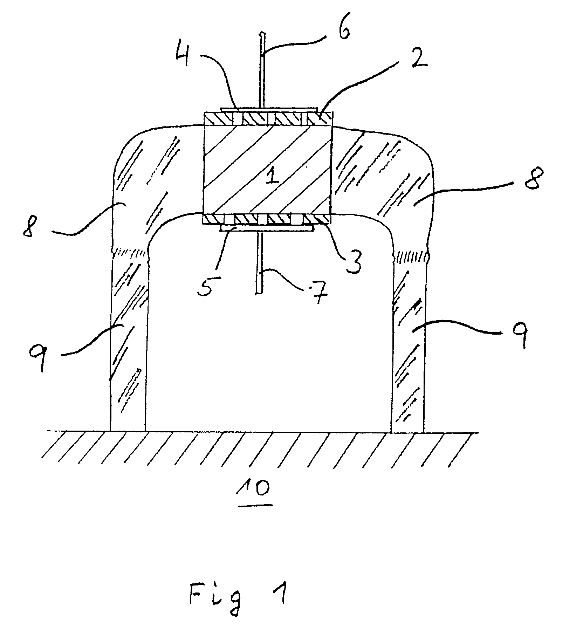

In Figur 1 ist ein Gassensor dargestellt, der einen Festelektrolyten (1) aus tetragonalem Zirkondioxid besitzt, an dessen beiden Stirnenden Meßelektroden (2) und (3) aus einer porösen Platinstruktur aufgebracht sind. Über die eine Meßelektrode (2) hat beispielsweise das Meßgas Zutritt zu dem Festelektrolyten, wohingegen die zweite Meßelektrode (3) beispielsweise Luft als Referenzgas ausgesetzt ist. Mit den beiden Meßelektroden (2) und (3) sind Ableitelektroden (4) und (5) in Kontakt, von denen über die Signalleitungen (6) und (7) ein Meßsignal an eine nicht dargestellte Auswerteeinheit zugeführt wird. Der Gassensor ist über Glasstege (8) und (9) mit einer Unterlage (10) verbunden. Es hat sich gezeigt, daß das Material des Festelektrolyten aus tetragonalem Zirkondioxid, im Gegensatz zu dem bekannten kubisch stabilisierten Zirkondioxid, zur Herstellung einer Glasverbindung besonders geeignet ist. Dazu wird zunächst ein erster Glassteg (8) aus Übergangsgläsern an den Festelektrolyten angeschmolzen, dem ein zweiter Glassteg (9) zur weiteren Verbindung an die Unterlage 10) folgt.

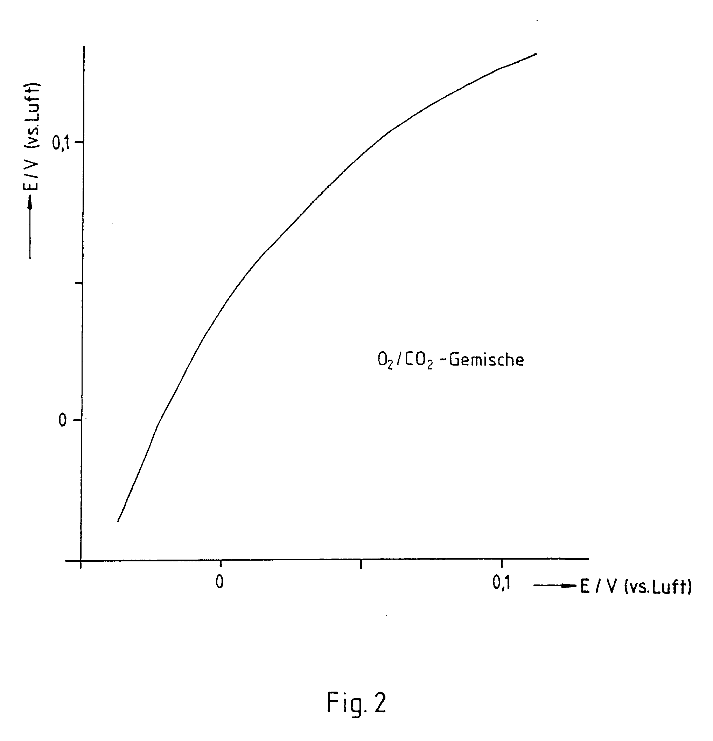

In Figur 2 ist eine vergleichende Messung zwischen dem bekannten Gassensor mit kubisch-stabilisiertem Zirkondioxid und einem Gassensor mit tetragonalem Zirkondioxid dargestellt. Auf der Abszisse sind die für verschiedene Meßgassauerstoffpartialdrücke erhaltenen Meßwerte EMK (in Volt)einer Zelle mit kubisch-stabilisiertem $ZrO_2$ (Referenzgas Luft) aufgetragen, wie sie bei einer Betriebstemperatur von 800 °C erhalten wurden. Auf der Ordinate sind die entsprechenden Meßwerte aufgetragen, die mit einem Gassensor erhalten wurden, der den in den verwendeten Reaktionsgasen ($O_2/CO_2$) vorliegenden Sauerstoffpartialdrücken ausgesetzt war, jedoch einen Festelektrolyten aus tetragonalem Zirkondioxid enthielt, und lediglich

3

EP 0 227 996 B1

auf eine Betriebstemperatur von 300°C gehalten wurde. Die Gleichgewichtseinstellung des Sensors mit tetragonalem Zirkondioxid während des Meßvorganges ist besonders im Bereich niedriger Sauerstoffpartialdrücke sehr schnell und erfolgt innerhalb des Zeitbedarfs für die durch Änderung der Meßgaszusammensetzung bewirkte Sauerstoffpartialdruckvariation, d.h. innerhalb von Sekunden, sogar bei Betriebstemperatu-ren von 200°C. Bei höheren Sauerstoffpartialdrücken im Konzentrationsbereich der umgebenden Luft ist die Gleichgewichtseinstellung von der Größenordnung einiger Minuten.

**Patentansprüche**

1. Verfahren zur Messung von Gaspartialdrücken bei erhöhter Temperatur mit einem ionenleitenden $ZrO_2$-Körper als Festelektrolyt, welcher zwischen zwei Elektroden zum Abgreifen einer elektrischen Meßgröße angeordnet ist,
   **dadurch gekennzeichnet,**
   daß man im Temperaturbereich von 200 bis 300°C mit tetragonalem $ZrO_2$ mit einem Zusatz von 2 bis 3 Mol-% $Y_2O_3$ als Festelektrolyt mißt.

2. Verfahren nach Anspruch 1,
   **dadurch gekennzeichnet,**
   daß ein Sauerstoffpartialdruck gemessen wird.

**Claims**

1. Method for the measurement of gas partial pressures at increased temperatures with a $ZrO_2$ body which conducts ions as the solid electrolyte which is positioned between two electrodes for the measurement of an electrical parameter, **wherein** one measures in the temperature range of 200 to 300°C using tetragonal $ZrO_2$ with an addition of 2 to 3 Mol-% $Y_2O_3$ as the solid electrolyte.

2. Method as claimed in claim 1, **wherein** an oxygen partial pressure is measured.

**Revendications**

1. Procédé pour mesurer des pressions partielles de gaz à température élevée avec un corps de $ZrO_2$ conducteur d'ions comme électrolyte solide qui est disposé entre deux électrodes pour capter une grandeur de mesure électrique, caractérisé en ce que l'on mesure dans le domaine de température de 200 à 300°C avec du $ZrO_2$ tétragonal avec une addition de 2 à 3% molaires de $Y_2O_3$ comme électrolyte solide.

2. Procédé selon la revendication 1, caractérisé en ce que l'on mesure une pression partielle d'oxygène.

4

Fig 1

Fig. 2